# EUROPÄISCHE PATENTSCHRIFT

(11) **EP 1 252 979 B1**
(45) Veröffentlichungstag und Bekanntmachung des Hinweises auf die Patenterteilung: **17.09.2008**
(21) Anmeldenummer: 02008986.8
(22) Anmeldetag: 23.04.2002
(51) Int. Cl.: B25J 19/00

(54) **Roboterteil mit einer Haltevorrichtung zum Halten von Kabeln mit Rastelementen**
Robot part with a device for holding cables comprising snap-in elements
Partie d'un robot muni d'un dispositif de soutien de câbles comprenant des moyens d'encliquetage

(30) Priorität: 28.04.2001 DE 10121030
(43) Veröffentlichungstag der Anmeldung: 30.10.2002
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost

(56) Entgegenhaltungen:
- EP-A- 0 709 609
- EP-A- 0 881 120
- EP-A- 1 029 638
- EP-A- 1 108 945
- DE-U- 20 109 419
- US-A- 5 651 519
- US-A- 5 816 736

## Beschreibung

Die Erfindung betrifft ein Roboterteil mit einer Haltevorrichtung zum Halten von Zusatzteilen, wie Kabeln, Schläuchen oder dgl. gemäß dem Oberbegriff des Anspruchs 1.

Aus der DE 299 02 947 U1 ist ein gattungsgemäßes Roboterteil mit einer Haltevorrichtung bekannt, bei dem ein mehrteiliges Ringteil um das Roboterteil, wie den Flansch einer Roboterhand gelegt und gegen dieses verspannt wird. Wenn aus irgendeinem Grunde ein Lösen der Haltevorrichtung vom Roboterteil erforderlich ist, so ist es schwierig die vorherige Ausrichtung wieder genau zu erreichen; zumindest muss diese vorher genau ausgemessen und dann bei einer erneuten Anlegung die Ausrichtung entsprechend überprüft werden. Soweit ein sich von diesem Ringteil radial erstreckender Arm der Haltevorrichtung mit kreisförmigem Querschnitt ausgebildet ist und auf diesem ein Befestigungsteil oder -block, an dem ein Zusatzteil angebracht wird, durch Verspannen reibschlüssig festlegbar ist, gilt wiederum, dass bei einem Lösen die genaue angulare Ausrichtung des Befestigungsteils und die lineare Ausrichtung entlang der Achse des Armes nicht ohne weiteres und in einfacher Weise reproduzierbar ist, sondern hierzu vor Lösen und bei erneuter Befestigung Messungen und Abgleichungen vorzunehmen sind.

Der Erfindung liegt demgegenüber die Aufgabe zugrunde ein Roboterteil mit einer Haltevorrichtung der gattungsgemäßen Art dahingehend weiterzuentwickeln, dass eine einmal gewünschte Festlegung und Ausrichtung ohne weiteres und ohne aufwendige Messungen in schneller Weise reproduzierbar ist.

Erfindungsgemäß sieht die Erfindung hierzu ein Roboterteil mit einer Haltevorrichtung gemäß Anspruch 1 vor. Rastelemente können zwischen relativ zueinander bewegbaren Einzelteilen der Haltevorrichtung zur reproduzierbaren relativen Festlegung derselben aneinander aber auch derart an der Haltevorrichtung vorgesehen sein, dass diese als solche an dem Roboterteil, wie dem Flansch einer Roboterhand, reproduzierbar festlegbar ist.

In einer bevorzugten Ausgestaltung ist das erfindungsgemäße Roboterteil mit einer Haltevorrichtung demgemäss zunächst vorgesehen, dass ein um das Roboterteil umgreifendes Ringteil erste Rastelemente zum Zusammenwirken mit Rastelementen am Roboterteil aufweist, wobei die ersten Rastelemente als achsparallele Nuten ausgebildet sind, die mit einer oder mehreren Rippen oder Nasen am Roboterteil zur Verrastung zusammenwirken. Am Roboterteil selbst können ein oder mehrere Rippen oder Nasen ausgebildet sein. In bevorzugter Ausgestaltung ist dabei vorgesehen, dass die ersten Rastelemente am Innenumfang des Ringteils ausgebildet sind, wobei in diesem Falle die Rippen oder Nasen am Roboterteil an dessen Außenumfang vorgesehen sind. Eine Umkehrung ist grundsätzlich ebenfalls möglich, wenn am Roboterteil ein Ringteil der Haltevorrichtung ein einseitig übergreifendes Element, beispielsweise ein Bügel vorgesehen ist, der fest, insbesondere unlösbar am Roboterteil vorgesehen ist und der das Ringteil übergreift; in diesem Falle kann der Bügel mit einem äußeren Steg in Außennuten teils eingreifen.

Zur reproduzierbaren linearen Festlegung eines Befestigungselementes, welches das Zusatzteil am radial erstrekkenden Arm der Haltevorrichtung trägt, ist in bevorzugter Ausgestaltung derselben vorgesehen, dass ein ein Roboterteil umgreifendes Ringteil aus zwei Teilen besteht, die gegen das Ringteil verspannbar sind, wobei insbesondere die Rastelemente am Arm als an diagonal gegenüberliegenden Längsflächen in gleichmäßigen Abstand entlang des Armes angeorneten Rippen ausgebildet sind. Dabei kann weiter vorgesehen sein, dass die Rippen, sich quer zur Erstreckungsrichtung des Armes erstreck, und dass sie die mit ein oder mehreren Nuten am Innenumfang des Befestigungsteils zusammenwirken.

Zur reproduzierbaren angularen Festlegung des Befestigungsteils am Arm der Haltevorrichtung sieht eine Weiterbildung vor, dass über den Umfang des Armes und den Innenumfang des Befestigungsteils gleichmäßig verteilt dritte Rastelemente vorhanden sind, wobei insbesondere die dritten Rastelemente durch Ausbildung des Querschnitts der Außenkontur des Armes und der Innenkontur des Befestigungsteils mit endlicher Zähligkeit gebildet ist, wobei die Zähligkeit der Innenkontur des Befestigungsteils gleich der Zähligkeit der Außenkontur des Armes oder ein Vielfaches derselben ist. Zähligkeit bezeichnet die angulare Verdrehmöglichkeit eines Teils um eine Achse, bei der ein Körper in sich selbst überführt wird, seine Positionen ununterscheidbar sind. Ein kreisförmiges Teil weist unendliche Zähligkeit auf, ist also im Rahmen der Erfindung insofern ausgeschlossen; ein Quadrat oder ein vierzackiger Stern weisen Zähligkeit 4, ein Sechseck Zähligkeit 6 etc. auf. Demgemäss sehen bevorzugte Weiterbildungen der Erfindung vor, dass der Arm quadratisch ausgebildet ist und in diesem Falle weiterhin insbesondere dass die Innenkontur des Befestigungsteils sternförmig mit einer Zähligkeit ausgebildet ist.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im einzelnen erläutert ist. Dabei zeigt:

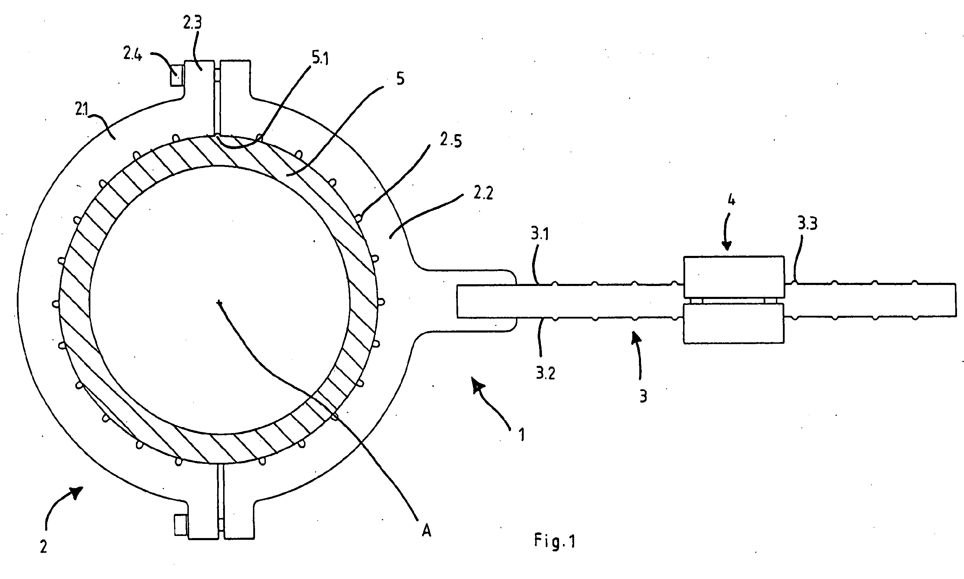

- Fig. 1: eine Seitenansicht auf ein erfindungsgemäßes Roboterteil mit einer Haltevorrichtung an einem geschnitten dargestellten Roboterteil, wie einem Handflansch;

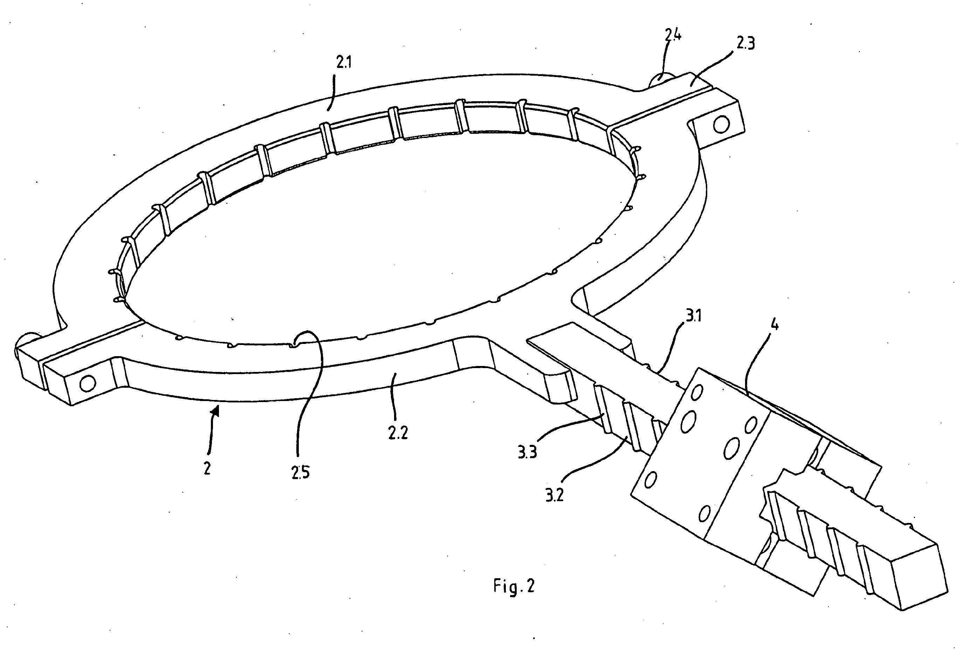

- Fig. 2: eine perspektivische Darstellung der Haltevorrichtung;

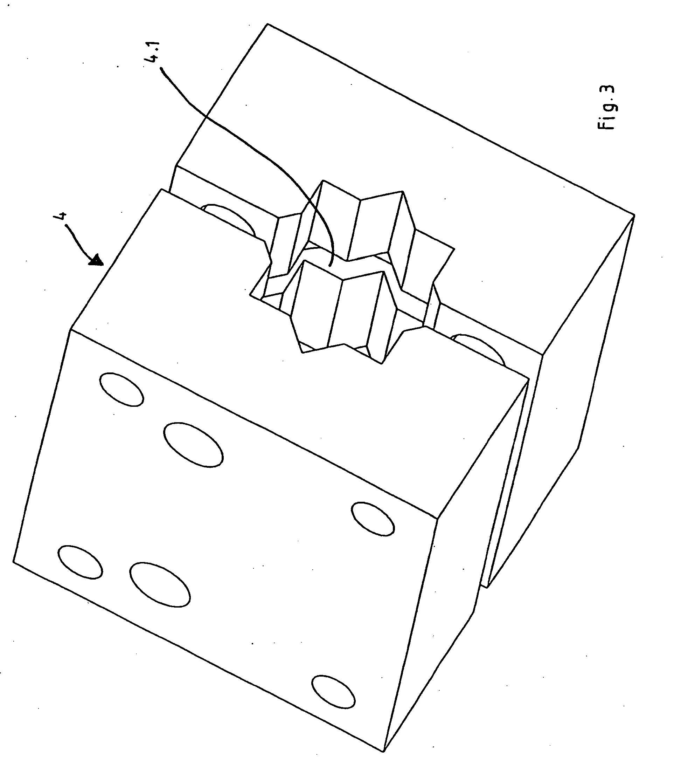

- Fig. 3: ein Befestigungsteil entsprechend den Fig. 1 und 2 zur Befestigung eines Zusatzteils am Roboter in perspektivischer Darstellung mit Blick auf die Innenkontur.

Die Haltevorrichtung 1 weist in der dargestellten Ausführungsform ein Ringteil 2, einen Arm 3, ein Befestigungselement 4 zur Befestigung von Zusatzteilen, wie Kabeln, Schläuchen oder dgl. in einem Roboterteil auf.

Die Haltevorrichtung 1 wird mittels des Ringteils 2 um Roboterteil 5, wie einen Handflansch einer Roboterhand befestigt. Das Ringteil 2 weist zwei Halbringe 2.1, 2.2 auf, die jeweils Ansätze 2.3 aufweisen, über die die Halbringe 2.1, 2.2 mittels Schrauben 2.4 zu dem vollständigen Ringteil 2 fest verbindbar sind.

Die Halbringe 2.1, 2.2 werden beiderseitig am Roboterteil 5 angelegt und dann mittels der Schrauben 2.4 miteinander verbunden und damit fest am Roboterteil 5 befestigt.

Zur sicheren Reproduzierbarkeit einer einmal gewählten bestimmten angularen Festlegung des Ringteils 2 am Roboterteil 5 und damit zur festen Ausrichtung des Armes 3 sieht das Ringteil 2 an seinem Innenumfang zu seiner Längsachse A (und damit auch zur Längsachse des Roboterteils 5) achsparallele Nuten 2.5 vor, die gleichmäßig über den Innenumfang des Roboterteils 2 verteilt sind. Diese Nuten 2.5 können an ihrem Außenumfang des Roboterteils 5 ausgebildeten Nase 5.1 oder Rippe zusammenwirken. Die Zähligkeit der angularen Festlegung des Ringteils bzw. Ausrichtung des Armes 3 ergibt sich durch die Anzahl der Nuten 2.5.

Der Arm 3 sieht an einem Außenumfang, zumindest an diagonal gegenüberliegenden Längsflächen 3.1, 3.2 als zweite Rastelemente in gleichmäßigem Abstand entlang dem Arm angeordnete Rippen 3.3 zur reproduzierbaren linearen Festlegung des Befestigungsteils 4 entlang der Erstreckungsrichtung des Armes 3 vor. Mit den Rippen 3.3 wirkt als Rastelement eine am Innenumfang des Befestigungsteils 4 ausgebildete Nut 4.1 zusammen.

Weiterhin sind erfindungsgemäß Rastelemente am Arm 3 und am Befestigungsteil 4 zur reproduzierbaren angularen Festlegung des Befestigungsteils 4 am Arm 3 vorgesehen. Diese sind allgemein derart gebildet, dass der Arm 3 nicht als Zylinderstab oder mit kreisförmigem Querschnitt ausgebildet ist, sondern seine Außenkontur ebenso wie die Innenkontur des Befestigungsteils 4 eine endliche Zähligkeit aufweist, wobei die Zähligkeit der Innenkontur des Befestigungsteils 4 gleich oder ein Vielfaches der Zähligkeit der Außenkontor des Armes 3 ist. Im dargestellten Ausführungsbeispiel ist der Arm 3 quaderförmig ausgebildet, d.h. er weist einen quadratischen Querschnitt mit vier Kanten und vier Ecken und damit der Zähligkeit 4 auf, während die Innenkontur des Befestigungsteils 4 den Querschnitt eines Sterns mit acht Zacken hat, also eine Zähligkeit 8 aufweist, die im dargestellten Ausführungsbeispiel damit doppelt so groß ist wie die Zähligkeit der Umfangskontur des Armes 3.

Die Zacken der Stern-Innenkontur des Befestigungsteils 4 weisen im dargestellten Ausführungsbeispiel einen rechten Innenwinkel auf, der im rechten Außenwinkel der Kanten des Armes 3 korrespondiert. Grundsätzlich sollten die die Zähligkeit des Befestigungsteils 4 bestimmenden sternförmigen Einkerbungen oder Nuten einen Innenwinkel haben, der dem Winkel der Kanten der Außenkontur des Armes 3 entspricht. Bei einem dreieckigen Stab (Zähligkeit 3) mit Innenkantenwinkeln von 60° sollte die Innenkontur des Befestigungsteils 4 einen 6-, 9-, 12-zackigen Stern (Zähligkeit 6,9 bzw. 12) aufweisen und sollte der Innenwinkel der die Innenkontur des Befestigungsteils 4 bestimmenden Zacken ebenfalls 60° betragen. Bei einem fünfzähligen Arm 3, also mit fünf Kanten, wobei die Seitenflächen einen Winkel von 108° einschließen sollte die Innenkontur des Befestigungsteils 4-, 5-, 10,-, 15-...-zählig sein, wobei der Innenwinkel der diese Kontur bildenden Zacken ebenfalls 108° beträgt. Entsprechendes gilt für sechs- und mehrkantig ausgebildeten Arme 3.

Auch hierdurch lässt sich die einmal vorgesehene gewünschte angulare Ausrichtung des Befestigungsteils 4 und damit des an diesem festzulegenden Zusatzteils um den Arm 4 in einfacher Weise reproduzierbar gestalten.

### Bezugszeichenliste

- 1: Befestigungsvorrichtung
- 2: Ringteil
- 2.1, 2.2: Halbringe
- 2.3: Ansätze
- 2.4: Schrauben
- 2.5: achsparallele Nuten
- 3: Arm
- 3.1, 3.2: Längsflächen
- 3.3: Rippen
- 4: Befestigungselement
- 4.1: Nut
- 5: Roboterteil
- 5.1: Nase
- 8: Zähligkeit

## Patentansprüche

1. Roboterteil mit einer Haltevorrichtung zum Halten von Zusatzteilen, wie Kabeln, Schläuchen oder dgl., **gekennzeichnet durch** Rastelemente (3.3), die an einem Arm der Haltevorrichtung (1) (3) entlang dessen Längsrichtung hintereinander angeordnet sind und die mit an der Innenseite eines Befestigungsteils (4) für das Zusatzteil ausgebildeten Rastelementen zusammenwirken.

2. Roboterteil mit einer Haltevorrichtung nach Anspruch 1, **dadurch gekennzeichnet, dass** ein um das Roboterteil (5) umgreifendes Ringteil (2) erste Rastelemente (2.5) zum Zusammenwirken mit Rastelementen (5.1) am Roboterteil aufweist.

3. Roboterteil mit einer Haltevorrichtung nach Anspruch 1 oder 2, **dadurch gekennzeichnet, dass** die ersten Rastelemente als achsparallele Nuten (2.5) ausgebildet sind, die mit einer oder mehreren Rippen oder Nasen (5.1) am Roboterteil zur Verrastung zusammenwirken.

4. Roboterteil mit einer Haltevorrichtung nach einem der Ansprüche 1 bis 3, **dadurch gekennzeichnet, dass** die ersten Rastelemente (2.5) am Innenumfang des Ringteils (2) ausgebildet sind.

5. Roboterteil mit einer Haltevorrichtung nach einem der vorangehenden Ansprüche, **dadurch gekennzeichnet, dass** ein ein Roboterteil (5) umgreifendes Ringteil (2) aus zwei Teilen (2.1, 2.2) besteht, die gegen das Roboterteil (5) verspannbar sind.

6. Roboterteil mit einer Haltevorrichtung nach einem der vorangehenden Ansprüche **dadurch gekennzeichnet, dass** die Rastelemente (3.3) am Arm (3) als an diagonal gegenüberliegenden Längsflächen (3.1, 3.2) in gleichmäßigem Abstand entlang des Armes angeordnete Rippen ausgebildet sind.

7. Roboterteil mit einer Haltevorrichtung nach Anspruch 6, **dadurch gekennzeichnet, dass** die Rippen sich quer zur Erstreckungsrichtung des Armes (3) erstrecken , und dass sie mit ein oder mehreren Nuten (4.1) am Innenumfang des Befestigungsteils (4) zusammenwirken.

8. Roboterteil mit einer Haltevorrichtung nach einem der vorangehenden Ansprüche, **gekennzeichnet durch** über den Umfang des Armes (3) und den Innenumfang des Befestigungsteils (4) gleichmäßig verteilte dritte Rastelemente.

9. Roboterteil mit einer Haltevorrichtung nach Anspruch 8, **dadurch gekennzeichnet, dass** die dritten Rastelemente durch Ausbildung des Querschnitts der Außenkontur des Armes (3) und der Innenkontur des Befestigungsteils (4) mit endlicher Zähligkeit gebildet ist, wobei die Zähligkeit der Innenkontur des Befestigungsteils (4) gleich der Zähligkeit der Außenkontur des Armes (3) oder ein Vielfaches derselben ist.

10. Roboterteil mit einer Haltevorrichtung nach Anspruch 9, **dadurch gekennzeichnet, dass** der Arm (3) quadratisch (vier-zählig) ausgebildet ist.

11. Roboterteil mit einer Haltevorrichtung nach Anspruch 10, **dadurch gekennzeichnet, dass** die Innenkontur des Befestigungsteils (4) sternförmig mit einer Acht-Zähligkeit (a') ausgebildet ist.

12. Roboterteil mit einer Haltevorrichtung nach Anspruch 9, **dadurch gekennzeichnet, dass** die Innenkontur des Befestigungsteils (4) Innenwinkel aufweist, die den Winkeln der Kanten des Armes (3) entsprechen.

## Claims

1. A robot part having a holding device for holding additional parts, such as cables, hoses or the like, **characterised by** catch elements (3.3), which are arranged on an arm (3) of the holding device (1) one behind the other in the longitudinal direction thereof and which cooperate with catch elements provided on the inside of a fastening part (4) for the additional part.

2. A robot part having a holding device according to claim 1, **characterised in that** an annular part (2) engaging round the robot part (5) comprises first catch elements (2.5) for cooperating with catch elements (5.1) on the robot part.

3. A robot part having a holding device according to claim 1 or claim 2, **characterised in that** the first catch elements take the form of axially parallel grooves (2.5), which cooperate with one or more ribs or lugs (5.1) on the robot part for the purpose of latching engagement.

4. A robot part having a holding device according to any one of claims 1 to 3, **characterised in that** the first catch elements (2.5) are provided on the inner circumference of the annular part (2).

5. A robot part having a holding device according to any one of the preceding claims, **characterised in that** an annular part (2) engaging round a robot part (5) consists of two parts (2.1, 2.2), which may be tightened against the robot part (5).

6. A robot part having a holding device according to any one of the preceding claims, **characterised in that** the catch elements (3.3) are provided on the arm (3) in the form of ribs arranged uniformly spaced along the arm on diagonally opposing longitudinal faces (3.1, 3.2).

7. A robot part having a holding device according to claim 6, **characterised in that** the ribs extend transversely of the direction of extension of the arms (3) and **in that** they cooperate with one or more grooves (4.1) on the inner circumference of the fastening part (4).

8. A robot part having a holding device according to any one of the preceding claims **characterised by** third catch elements distributed uniformly over the circumference of the arm (3) and the inner circumference of the fastening part (4).

9. A robot part having a holding device according to claim 8, **characterised in that,** due to the construction of the cross-section of the outer contour of the arm (3) and of the inner contour of the fastening part (4), the third catch elements have a finite coordination number, the coordination number of the inner contour of the fastening part (4) being equal to the coordination number of the outer contour of the arm (3) or a multiple thereof.

10. A robot part having a holding device according to claim 9, **characterised in that** the arm (3) is of square construction (four-fold coordination).

11. A robot part having a holding device according to claim 10, **characterised in that** the inner contour of the fastening part (4) is of star-shaped construction with eight-fold coordination (a').

12. A robot part having a holding device according to claim 9, **characterised in that** the inner contour of the fastening part (4) has internal angles which correspond to the angles of the edges of the arm (3).

## Revendications

1. Partie d'un robot avec un dispositif de retenue pour tenir des parties supplémentaires, tels des câbles, flexibles ou autres, **caractérisée par** des éléments à cran d'arrêt (3.3), disposés l'un derrière l'autre sur un bras du dispositif de retenue (1) (3) le long de son sens longitudinal et qui agissent conjointement avec des éléments à cran d'arrêt formés sur la face intérieure d'une pièce de fixation (4) pour la partie supplémentaire.

2. Partie d'un robot avec un dispositif de retenue selon la revendication 1, **caractérisée en ce qu'**une pièce annulaire (2) enveloppant la partie du robot (5) présente de premiers éléments à cran d'arrêt (2.5) pour une action conjointe avec les éléments à cran d'arrêt (5.1) sur la partie du robot.

3. Partie d'un robot avec un dispositif de retenue selon la revendication 1 ou 2, **caractérisée en ce que** les premiers éléments à cran d'arrêt se présentent sous forme de rainures (2.5) parallèles à l'axe qui agissent conjointement pour l'enclenchement avec une ou plusieurs nervures ou clavettes (5.1) sur la partie du robot.

4. Partie d'un robot avec un dispositif de retenue selon une des revendications 1 à 3, **caractérisée en ce que** les premiers éléments à cran d'arrêt (2.5) sont formés sur la circonférence intérieure de la pièce annulaire (2).

5. Partie d'un robot avec un dispositif de retenue selon une des revendications qui précèdent, **caractérisée en ce qu'**une pièce annulaire (2) enveloppant la partie du robot (5) comprend deux parties (2.1, 2.2), lesquelles sont déformables contre la partie du robot (5).

6. Partie d'un robot avec un dispositif de retenue selon une des revendications qui précèdent, **caractérisée en ce que** les éléments à cran d'arrêt (3.3) sur le bras (3) se présentent sous forme de nervures disposées à intervalles réguliers le long dudit bras sur des surfaces longitudinales diagonalement opposées (3.1, 3.2).

7. Partie d'un robot avec un dispositif de retenue selon la revendication 6, **caractérisée en ce que** les nervures s'étendent transversalement au sens de projection du bras (3) et **en ce qu'**elles agissent conjointement avec une ou plusieurs rainures (4.1) sur la circonférence intérieure de la pièce de fixation (4).

8. Partie d'un robot avec un dispositif de retenue selon une des revendications qui précèdent, **caractérisée par** de troisièmes éléments à cran d'arrêt répartis régulièrement sur la circonférence du bras (3) et sur la circonférence intérieure de la pièce de fixation (4).

9. Partie d'un robot avec un dispositif de retenue selon la revendication 8, **caractérisée en ce que** les troisièmes éléments à cran d'arrêt sont formés par configuration de la section transversale des contours extérieurs du bras (3) et des contours intérieurs de la pièce de fixation (4) avec une direction de symétrie finie, la direction de symétrie des contours intérieurs de la pièce de fixation (4) étant égale à la direction de symétrie des contours extérieurs du bras (3) ou à un multiple de ladite direction.

10. Partie d'un robot avec un dispositif de retenue selon la revendication 9, **caractérisée en ce que** le bras (3) est de forme carrée (quatre directions de symétrie).

11. Partie d'un robot avec un dispositif de retenue selon la revendication 10, **caractérisée en ce que** les contours intérieurs de la pièce de fixation (4) sont en forme d'étoile avec huit directions de symétrie (a').

12. Partie d'un robot avec un dispositif de retenue selon la revendication 9, **caractérisée en ce que** les contours intérieurs de la pièce de fixation (4) présentent des angles intérieurs égaux aux angles des arêtes du bras (3).
